Europäisches Patentamt

European Patent Office

Office européen des brevets

(11) Veröffentlichungsnummer: **0 295 466**
**A2**

## (12) EUROPÄISCHE PATENTANMELDUNG

(21) Anmeldenummer: 88108309.1

(22) Anmeldetag: 25.05.88

(51) Int. Cl.⁴ **F01M 5/00 , G05D 23/13**

(30) Priorität: 13.06.87 DE 3719843

(43) Veröffentlichungstag der Anmeldung:
21.12.88 Patentblatt 88/51

(84) Benannte Vertragsstaaten:
DE FR GB IT

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Zeller, Hans-Jürgen, Dipl.-Ing. (FH)**
**Schliefergässchen 8**
**D-8900 Augsburg(DE)**

(54) **Ventil zur Regelung der Öltemperatur eines Triebwerks.**

(57) Ein die Öltemperatur eines Triebwerks in Verbindung mit einem Kühler 2 regelndes Ventil 1 ist im
Ölstrom zwischen dem Triebwerk und dem Kühler
angeordnet. In einem mit Zuflußöffnungen vom
Triebwerk 7 und vom Kühler 5 sowie Abflußöffnungen zum Kühler 4 und zum Triebwerk 8 versehenen
Gehäuse 3 ist eine mit Bohrungen und Nuten versehene Führungshülse 10 angeordnet, welche ein vom
Ölstrom beaufschlagtes temperaturabhängiges
Dehnstoffelement 16, einen mit Nuten versehenen
Steuerschieber 18, eine Drucksteuerfeder 19 und
eine Rückstellfeder 22 aufnimmt. Je nach Stellung
des vom Kolben 20 des Dehnstoffelementes 16 zu
verschiebenden Steuerschiebers 18 liegt das Ventil
1 im Hauptstrom zwischen dem Triebwerk und dem
Kühler 2 und/oder im Nebenstrom zwischen seiner
Zuflußöffnung 7 des vom Triebwerk kommenden Ölstroms und seiner Abflußöffnung 8 zum Triebwerk.

FIG. 1

Xerox Copy Centre

## Ventil zur Regelung der Öltemperatur eines Triebwerks

Die Erfindung bezieht sich auf ein die Öltemperatur eines Triebwerks in Verbindung mit einem Kühler regelndes Ventil gemäß dem Oberbegriff des Anspruchs 1.

Es ist erwünscht, in der Warmlaufphase eines Triebwerks auch das Schmieröl möglichst schnell zu erwärmen, um eine einwandfrei Schmierung aller Triebwerksteile zu gewährleisten. Diese Forderung ist besonders bei hohen Kältegraden wichtig, bei denen bekanntlich das Triebwerksöl verdickt und seine Schmierfähigkeit stark herabgesetzt ist. Weiterhin ist ein ständig im Öldurchfluß liegender Ölkühler der Erwärmung des Öls hinderlich, weil das Öl diesen erst mit erwärmen muß.

Der Erfindung liegt die Aufgabe zugrunde, ein Ventil der eingangs genannten Art so auszubilden, daß es eine kurze Warmlaufphase des Triebwerks und des Öls auch in einer Umgebung mit extrem niedriger Temperatur ermöglicht und bei warmen Triebwerk eine weitgehend konstante Ölrücklauftemperatur gewährleistet.

Diese Aufgabe wird durch die im Anspruch 1 gekennzeichneten Merkmale gelöst. Vorteilhafte Weiterbildungen der Erfindung sind in den Unteransprüchen wiedergegeben.

Der wesentliche Vorteil der Erfindung besteht darin, daß das Öl bei niedrigen Temperaturen das Ventil im Nebenstrom durchfließen kann. Somit ist es nicht erforderlich, das Öl erst durch den kalten Kühler zu drücken, es fließt vielmehr auf dem - schnellsten Weg wieder in das Triebwerk zurück, wo es sich schnell erwärmen kann. Das handelsübliche Dehnstoffelement kann mit einer solchen Kennlinie gewählt werden, daß erst bei einer Öl-Rücklauftemperatur von z.B + 56° C, bei der das Öl seine volle Schmierfähigkeit besitzt, der Steuerschieber den Weg zum Kühlerdurchfluß freigibt. Weiterhin beugt das erfindungsgemäße Ventil einer Überhitzung des Öls vor und seine Bauteile sind so ausgelegt und angeordnet, daß bei Ausfall eines derselben keine Beeinträchtigung des Ölrücklaufes eintritt. Ein weiterer Vorteil besteht in dem einfachen mechanischen Aufbau des Ventils.

Die Erfindung wird nachfolgend anhand eines in der Zeichnung dargestellten Ausführungsbeispiels erläutert. Es zeigen

Fig. 1 ein vollständiges Ventil in teilweiser Schnittdarstellung an einen Kühler angebaut;

Fig. 2 eine in das Ventilgehäuse eingebaute Führungshülse;

Fig. 3 einen in die Führungshülse eingesetzten Steuerschieber;

Fig. 4 die Kennlinie eines in die Führungshülse eingebauten Dehnstoffelementes,

Fig. 5 die Funktionselemente des Ventils bei einem Triebwerksstart unter extrem niedrigen Temperaturbedingungen;

Fig. 6 die Funktionselemente des Ventils bei einer Temperatur von etwa + 30° C und

Fig. 7 die Funktionselemente des Ventils bei einer Betriebstemperatur von über + 90° C.

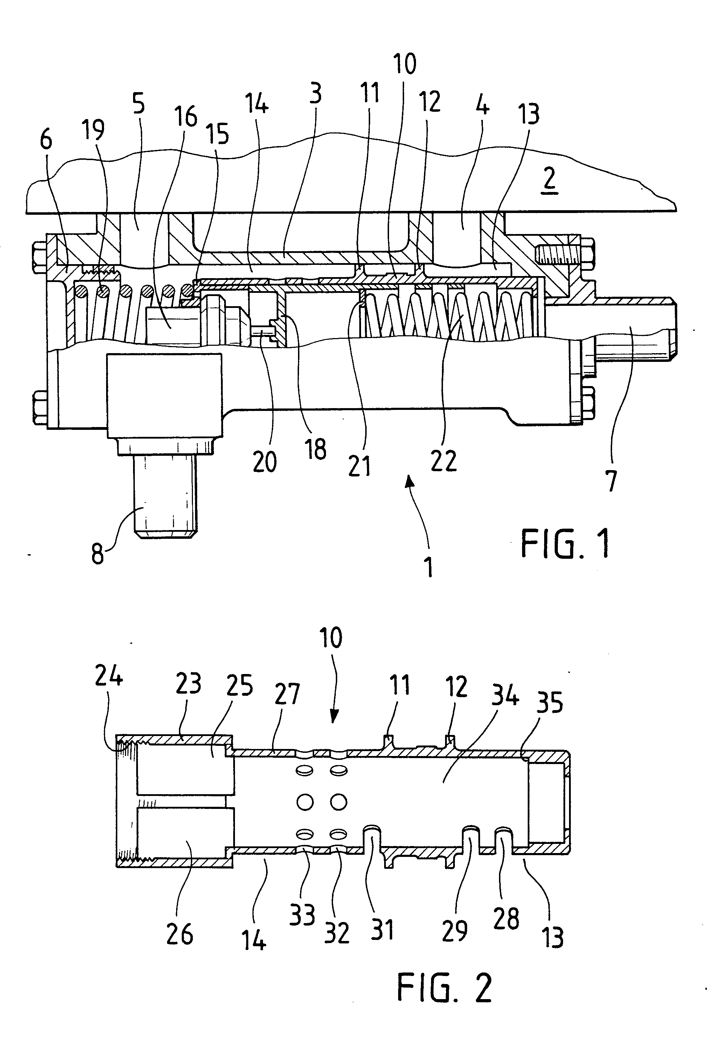

Ein Ventil 1 zur Regelung der Öltemperatur eines nicht dargestellten Triebwerks ist nach Fig. 1 an einen Kühler 2 angebaut. Durch die teilweise Schnittdarstellung sind die wesentlichen Bauteile des Ventils 1 ersichtlich. Diese bestehen aus einem Gehäuse 3 mit einer Abflußöffnung 4 zum und einer Zuflußöffnung 5 vom Kühler 2, zwei Abschlußdeckel 6 und 7, wobei der letztere zugleich Anschlußstutzen für die vom Triebwerk kommende Ölleitung ist, einem Anschlußstutzen mit Abflußöffnung 8 für das zum Triebwerk wieder abfließende Öl. Im Inneren des Gehäuses 3 ist eine Führungshülse 10 eingebaut, die zwischen sich und dem Gehäuse 3 zwei durch Stege 11 und 12 abgegrenzte Ringräume 13 und 14 freilassen. Die Führungshülse 10 grenzt an eine Schiebebuchse 15, in der ein Dehnstoffelement 16 gelagert ist. In die Führungshülse 10 ist ein Steuerschieber 18 eingesetzt, den das Dehnstoffelement mit einem Kolben 20 betätigen kann. Zwischen der Schiebehülse 15 und dem Deckel 6 ist eine Drucksteuerfeder 19 und zwischen einem in den Steuerschieber 17 eingesetzten Anschlagring 21 und einem Bund der Führungshülse 10 befindet sich eine Rückstellfeder 22. Das Ventil ist hier in funktionsloser Stellung bei ruhendem Triebwerk dargestellt.

In der Fig. 2 ist die Führungshülse 10 in Schnittdarstellung gesondert gezeigt. Diese ist als Drehteil ausgeführt, wobei der linke Teil 23 mit einem Innengewinde 24 versehen ist, in das der Deckel 6 eingeschraubt werden kann. In das Teil 23 mit größerem Durchmesser sind weiterhin zwei große Öffnungen 25 und 26 eingefräst, die als Durchströmöffnungen vom Kühler und zum Triebwerk dienen. Durch den längeren, gegenüber dem Teil 23 abgesetzten Teil 27, werden, unterbrochen von den Stegen 11 und 12, die Ringräume 13 und 14 gegenüber dem Gehäuse 3 geschaffen. Im Bereich des Ringraumes 13 sind Nuten 28 und 29 eingefräst, die sich etwa über die Hälfte des Ringraumes erstrecken. Im Bereich des Ringraumes 14 sind eine Nute 31 und zwei Reihen von je acht Bohrungen 32 und 33 eingearbeitet. Die Nuten haben vorzugsweise eine Breite von 4 mm und die Bohrungen einen Durchmesser von ebenfalls 4 mm. Die Führungsbuchse 10 hat eine durchgehende Bohrung 34, durch die rechts das vom Triebwerk hineinge drückt Öl einfließen kann.

Rechts ist ein Absatz 35 vorhanden, die als Begrenzungsring für den Steuerschieber 18 dienen kann.

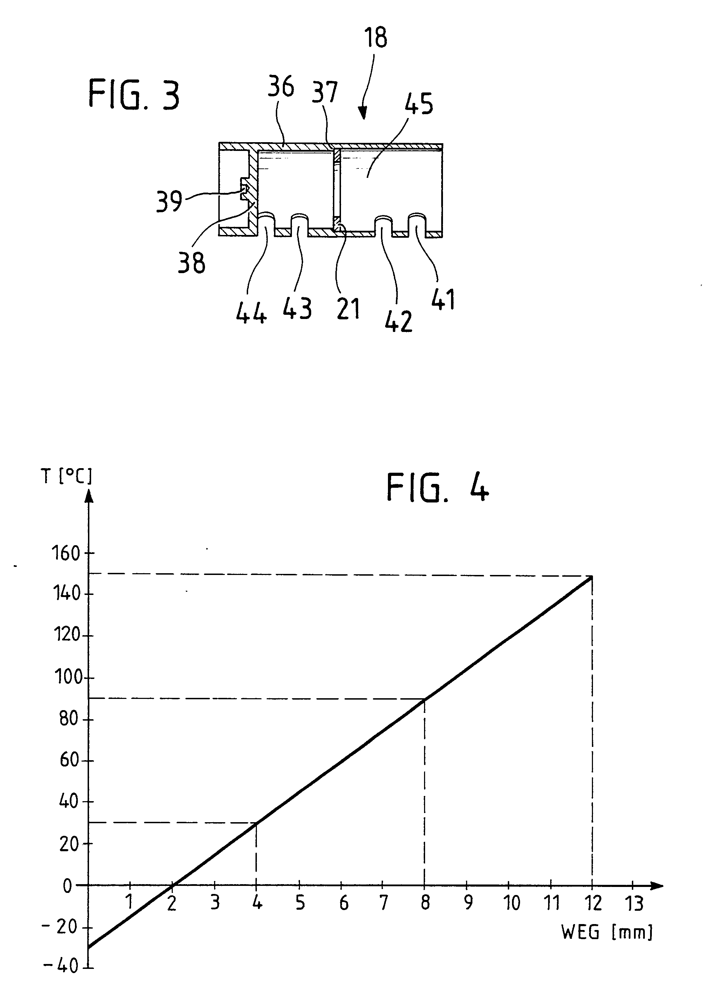

Der in die Führungsbuchse 10 einzusetzende Steuerschieber 18 ist in der Fig. 3 näher erläutert. Der überwiegend als Ringteil ausgeführte Steuerschieber 18 hat in seiner Wandung 36 einen Absatz 37, gegen den der Anschlagring 21 zur Abstützung der Rückstellfeder 22 anliegt. Im linken Teil ist eine innere Wandung 38 vorhanden, die rechts als Druckfläche für das aus dem Triebwerk eintretende Öl dient und links eine Bohrung 39 aufweist, in die das Dehnstoffelement 16 mit seinem Kolben 20 eingreifen kann. Weiterhin sind vier Nuten 41 bis 44 eingefräst, die mit den Bohrungen und Nuten der Führungsbuchse 10 korrespondieren. Eine Bohrung 45 durchdringt den Steuerschieber 18 bis zur Wandung 38.

Das Ventil 1, nutzt die physikalischen Eigenschaften des Öls zu einer sinnvollen Steuerung des vom Triebwerk kommenden Ölstroms mit Hilfe seiner druck- und temperaturgesteuerten Bauteile. Das im Kühler 2 zu kühlende Öl, welches im Normalbetrieb bei warmen Triebwerk mit einem Betriebsdruck von 2,5 - 3 bar vom Triebwerk in das Ventil 1 einströmt, erfährt bei Temperaturen unter + 10°C eine starke Viskositätserhöhung. Der Betriebsdruck vor dem Kühler 2 steigt dabei aufgrund seines hohen Durchflußwiderstandes bis auf das 3- bis 4-fache an. Zur Temperatursteuerung wird dabei das an und für sich bekannte Dehnstoffelement 16 verwendet, bei dem in einem formsteifen, druckfesten Behälter eine Dehnstofffüllung untergebracht ist, die bei Temperaturerhöhung schmilzt. Die beim Schmelzvorgang auftretende erhebliche Volumenzunahme wird unmittelbar über den Kolben 20 als Arbeitsleistung zum Verschieben des Steuerschiebers 18 genutzt. Bei Abkühlung wird der Kolben 20 mittels der Rückstellfeder 22 wieder eingeschoben. Das hier verwendete Dehnstoffelement 16 hat eine lineare Abhängigkeit seines Kolbenweges von der Temperatur entsprechend Fig. 4. Die Ausdehnung des Dehnstoffes beginnt hier also bei - 30°C und ist linear konstant und verwertbar als Arbeitshub für den Kolben 20 bis +150°C, wobei die übliche Arbeitstemperatur bei etwa + 90°C liegt. Es ist aus dem Kennlinien-Diagramm der Fig. 4 ersichtlich, daß jeder Temperaturzunahme von 15°C ein Arbeitsweg des Kolbens 20 von 1 mm entspricht. Da das Dehnstoffelement 16 bei jeder Funktionsweise des Ventils 1 im Öl-Rückstrom liegt, ist der Arbeitshub seines Kolbens 20 ausschließlich durch die Öltemperatur bedingt.

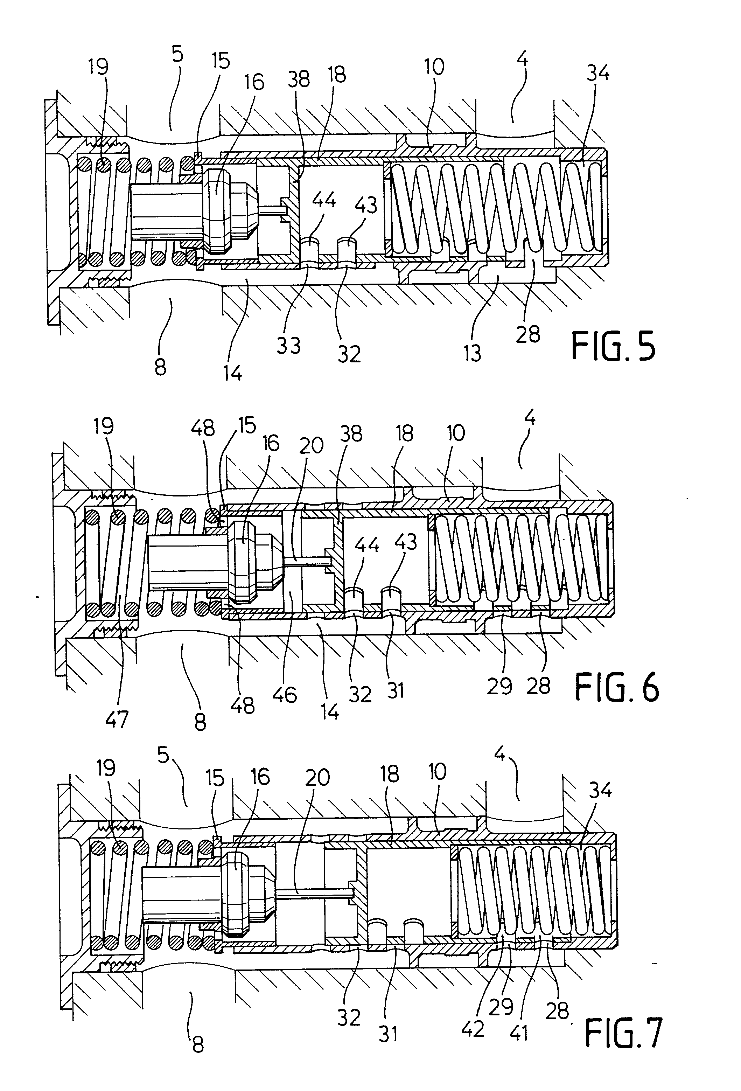

Um die Funktionsweise des Ventils 1 eingehend zu erläutern, sind nachfolgend in den Fig. 5 bis 7 bei drei wesentlichen Temperaturgraden die dabei vorhandenen Stellungen der Steuerglieder dargestellt. Bei diesen Figuren ist zum besseren Verständnis der Funktionsweise die Führungshülse 10 um 180° verdreht gegenüber der Darstellung in Fig. 2 gezeigt. Es sei angenommen, daß das Triebwerk bei einer Tiefsttemperatur von - 30°C oder darunter in Betrieb genommen wird. Bei dieser Temperatur tritt kaltes, hochviskoses Öl vom Triebwerk in die Öffnung 34 der Führungshülse 10 ein. Bedingt durch die hohe Viskosität des Öls und den Druchflußwiderstand des Kühlers baut sich ein hoher Druck im Ventil eingangsseitig auf. Dieser Druck erzeugt an der Wandung 38 des Steuerschiebers 18 eine Kraft, die über die Schiebebuchse 15 auf die Drucksteuerfeder 19 wirkt. Ist dabei eine definierte Öffnungskraft überschritten, so werden entsprechend Fig. 5 von dem Steuerschieber 18 die Schiebebuchse 15 und das Dehnstoffelement 16 als eine Einheit bis zum Zusammendrücken der Drucksteuerfeder 19 verschoben. Weil die Drucksteuerfeder 19 maximal 4 mm zusammendrückbar ist, überdecken sich die Nuten 43 und 44 des Steuerschiebers 18 genau mit den Bohrungen 32 und 33 der Führungsbuchse 10. Somit fließt das kalte Öl im Nebenfluß in den Ringraumn 14 und durch die Ausflußleitung 8 in das Triebwerk zurück. Dieser Rückfluß zum Triebwerk erfolgt beinahe drucklos bei etwa 0,5 bar. Während dieser Funktion ist zwar der Zugang zum Ringraum 13 und damit zur Kühler-Zuflußöffnung 4 über die Nut 28 der Führungsbuchse 10 möglich, es tritt jedoch wegen dem hohen Durchflußwiderstand des Kühlers kein Öl hindurch.

Das Öl erwärmt sich durch den kurzen Weg vom Triebwerk im Nebenfluß durch das Ventil 1 und wieder zum Triebwerk ziemlich rasch, so daß auch seine Viskosität rasch abnimmt. Bei etwa 0°C ist somit der gegen die Wandung 38 wirkende Öldruck so weit herabgesetzt, daß er nicht mehr ausreicht, um die Drucksteuerfeder 19 zusammengedrückt zu halten. Letztere kann sich wieder ausdehnen, wobei sie die Schiebebuchse 15 mit dem Dehnelement 16 und dem Steuerschieber 18 nach rechts gemeinsam verschiebt. Weil ein Raum 46 zwischen der Schiebebuchse 15 und der Wandung 38 sonst vollkommen abgedichtet ist, sind zum Ölausgleich zum nebenliegenden Raum 47 in der Schiebebuchse 15 mindestens zwei Bohrungen 48 vorgesehen. Da das Dehnstoffelement 16 seinen Arbeitshub bei - 30°C beginnt, hat es mit seinem Kolben 20 den Steuerschieber 18 um 2 mm verschoben. Bei einer weiteren Erwärmung des Öl-Rückstroms auf + 30°C ist der Kolben 20 entsprechend dem Kennlinien-Diagramm der Fig. 4 um 4 mm und der Steuerschieber 18 insgesamt um 8 mm verschoben. Bei dieser Stellung, die in der Fig. 6 dargestellt ist, sind die Nut 43 des Steuerschiebers 18 mit der Nut 31 der Führungsbuchse 10 und die Nut 44 des Steuerschiebers 18 mit der Bohrungsreihe 32 der Führungsbuchse 10 überdeckt und die Zuflußnute 28 und 29 der Führungsbuchse 10 zum Kühleraustritt 4 abgedeckt, so daß das Öl ausschließlich im Nebenfluß in den Ringraum 14 und direkt durch die Ausflußleitung 8 zum Triebwerk zurückfließt.

Steigt die Öl-Rückstromtemperatur weiter an, so ist bei + 90° C entsprechend dem Kennlinien-Diagramm der Fig. 4 ein Weg des Kolbens 20 um weitere 4 mm erfolgt. Dabei ist entsprechend Fig. 7 der Steuerschieber 18 ganz bis zum Anschlag an die Führungsbuchse 10 geschoben, wobei die Nuten 41 und 42 des Steuerschiebers 18 in Deckung mit dem Nuten 28 und 29 der Führungsbuchse 10 gebracht und die in der Stellung der Fig. 6 noch offene Nut 31 sowie die Bohrungen 32 der Führungsbuchse abgedeckt sind. Bei dieser Betriebstemperatur des Öls erfolgt der Öldurchfluß vom Triebwerk durch die Eingangsbohrung 34 und die Nuten 41, 28 bzw. 29, 42 ausschließlich in die Abflußöffnung 4 zum Kühler 2 und vom Kühler wieder zurück durch die Einflußöffnung 5, umfließt das Dehnstoffelement 16 und tritt durch die Anschlußöffnung 8 zum Triebwerk wieder aus. Steigt aus irgendeinem Grund die Öl-Rückstromtemperatur über + 90° C, benutzt der sich weiter ausdehnende Kolben 20 die Rückkraft des an der Führungsbuchse 10 anliegenden Steuerschiebers 18 zum Rückverschieben des Dehnstoffelementes 16, das über die Schiebebuchse 15 die Drucksteuerfeder 19 zusammendrückt.

Bei Ausfall eines der kritischen Teile besteht die Gewähr, daß die Funktionstüchtigkeit des Ventils 1 erhalten bleibt. Dieses ist besonders beim Einbau in ein Fluggerät-Triebwerk wichtig, weil eine zu starke Überhitzung des Triebwerkes ein Abschalten desselben bedingt. Bei einem Ausfall des Dehelementes 16, z.B. durch Auslaufen, wird der Kolben 20 durch Druck der Rückstellfeder 22 auf den Steuerschieber 18 zügig in seine Ausgangslage zurückgeschoben. In dieser Endstellung entsprechend Fig. 1 ist die Abflußöffnung 4 zum Kühler 2 geöffnet und der Nebenfluß für das Öl geschlossen. Bei einem Bruch der Drucksteuerfeder 19 kann sich diese maximal um 4 mm zusammenschieben. Somit wird der Nebenfluß kurzzeitig geöffnet, wobei das Dehnelement 16 mit z.B. 150° heißem Öl beaufschlagt wird. Das Dehnelement 16 reagiert gemäß seiner Kennlinie (siehe Fig. 4) und schiebt über den Kolben 20 den Steuerschieber 18 um den Weg von 4 mm wieder zurück, so daß die Funktion des Ventils 1 entsprechend Fig. 7 aufrechterhalten bleibt. Durch den Bruch der Rückstellfeder 22 tritt keine Beeinträchtigung der Ventilfunktion beim Betrieb mit warmen Triebwerk ein, weil der Betriebsdruck des Öls den Federdruck ersetzt.

## Ansprüche

1. Die Öltemperatur eines Triebwerks in Verbindung mit einem Kühler regelndes Ventil, in dem ein vom Ölstrom beaufschlagtes temperaturabhängiges Dehnstoffelement und unter Federdruck stehende Stellglieder zum Öffnen und Schließen von Zuflußöffnungen und Abflußöffnungen angeordnet sind, **gekennzeichnet** durch die nachfolgend aufgeführten Merkmale:
- das Ventil (1) ist im Ölstrom zwischen dem Triebwerk und dem Kühler (2) angeordnet,
- in einem mit Zuflußöffnungen (5, 7) und Abflußöffnungen (4,8) versehenen Gehäuse (3) ist eine, das Dehnstoffelement (16) und die Stellglieder aufnehmende, mit Bohrungen und Nuten versehene Führungshülse (10) angeordnet;
- das Dehnstoffelement (16) ist mit einem äußeren Flansch versehen, gegen den eine, die Lage des Dehnstoffelemtes fixierende Drucksteuerfeder (19) anliegt,
- der Kolben (20) des Dehnstoffelementes (16) wirkt auf einen, in der Führungshülse (10) verschiebbaren, mit Nuten versehenen Steuerschieber (18);
- je nach Stellung des Steuerschiebers (18) liegt das Ventil (1) im Hauptstrom zwischen dem Triebwerk und dem Kühler (2) und/oder im Nebenstrom zwischen seiner Zuflußöffung (7) des vom Triebwerk kommenden Ölstroms und seiner Abflußöffnung (8) zum Triebwerk.

2. Ventil nach Anspruch 1, **dadurch gekennzeichnet,** daß die Zuflußöffnung (7) vom Triebwerk direkt in die Führungshülse (10) und den Steuerschieber (18) mündet.

3. Ventil nach Anspruch 1, **dadurch gekennzeichnet,** daß die Abflußöffnung (4) zum Kühler in einen ersten zwischen dem Gehäuse (3) und der Führungshülse (18) vorhandenen Ringraum (13) mündet.

4. Ventil nach Anspruch 3, **dadurch gekennzeichnet,** daß in der Führungshülse (10) im Bereich des ersten Ringraumes (13) zwei Nuten (28, 29) vorhanden sind, die durch entsprechende Nuten (41, 42) im Steuerschieber (18) zu öffnen oder schließen sind.

5. Ventil nach Anspruch 1, **dadurch gekennzeichnet,** daß die Zuflußöffnung (5) vom Kühler (2) und die Abflußöffnung (8) zum Triebwerk in einen zweiten zwischen dem Gehäuse (3) und der Führungshülse (10) vorhandenen Ringraum (14) einmünden.

6. Ventil nach Anspruch 5, **dadurch gekennzeichnet,** daß in der Führungshülse (10) im Bereich des zweiten Ringraumes (14) eine Nut (31) und zwei Reihen Bohrungen (32, 33) vorhanden sind, die durch zwei Nuten (43, 44) im Steuerschieber (18) zu öffnen oder schließen sind.

7. Ventil nach Anspruch 1, **dadurch gekennzeichnet,** daß das Dehnstoffelement (16) in einer in der Führungshülse (10) verschiebbaren Schiebebuchse (15) gelagert ist, die einen Flansch aufweist, der einerseits am äußeren Flansch des Dehnstoffelementes (16) anliegt und gegen den andererseits die Drucksteuerfeder (19) drückt.

8. Ventil nach Anspruch1, **dadurch gekennzeichnet,** daß der Steuerschieber (18) eine innere Wandung (38) aufweist, gegen die auf einer Seite das vom Triebwerk einfließende Öl drückt und die auf der anderen Seite eine Aufnahmebohrung (39) für den Kolben (20) des Dehnstoffelementes (16) aufweist.

9. Ventil nach Anspruch 1, **dadurch gekennzeichnet,** daß der Steuerschieber (18) innen mit einem Absatz (37) zur Aufnahme eines Anschlagringes (21) versehen ist, gegen den eine sich an der Führungshülse (10) abstützende Rückstellfeder (22) drückt.

10. Ventil nach Anspruch 1, **dadurch gekennzeichnet,** daß in das der Zuflußöffnung (7) vom Triebwerk entgegengesetzten Ende der Führungshülse (10) ein Deckel (6) eingeschraubt ist, der mit einem äußeren Flansch zum Anschrauben an das Gehäuse (3) versehen ist und der als Aufnahme für die Drucksteuerfeder (19) dient.

EP 0 295 466 A2

FIG. 1

FIG. 2

10 256

FIG. 3

T [°C]

FIG. 4

WEG [mm]

10 256

EP 0 295 466 A2

FIG.5

FIG.6

FIG.7

10 256